# EUROPÄISCHE PATENTSCHRIFT

(11) **EP 3 326 754 B1**
(45) Veröffentlichungstag und Bekanntmachung des Hinweises auf die Patenterteilung: **12.01.2022**
(21) Anmeldenummer: 17202466.3
(22) Anmeldetag: 18.11.2017
(51) Int. Cl.: B24B 53/075, B24B 53/12, B24D 18/00

(54) **VERFAHREN ZUM ABRICHTEN EINER SCHLEIFSCHNECKE MITTELS EINER ABRICHTROLLE**
METHOD OF DRESSING A GRINDING WORM BY MEANS OF A DRESSING TOOL
PROCÉDÉ D'AJUSTEMENT D'UNE MEULE À VIS AU MOYEN D'UNE ROULETTE DE DRESSAGE

(30) Priorität: 28.11.2016 DE 102016014180
(43) Veröffentlichungstag der Anmeldung: 30.05.2018
(73) Patentinhaber: Kapp Werkzeugmaschinen GmbH, 96450 Coburg (DE); NILES Werkzeugmaschinen GmbH, 12681 Berlin (DE)
(72) Erfinder: Grinko, Sergiy, 96450 Coburg (DE)
(74) Vertreter: Gosdin, Michael

(56) Entgegenhaltungen:
- CH-A5- 684 249
- DE-A1-102010 045 836
- DE-U1- 9 107 089
- JP-A- 2005 271 127

## Beschreibung

Die Erfindung betrifft ein Verfahren zum Abrichten einer Schleifschnecke mittels einer Abrichtrolle, bei dem die mit einem abrasiven Profil versehene Abrichtrolle in Eingriff mit der Schleifschnecke gebracht wird, um deren schneckenförmiges Schleifprofil zu profilieren, wobei das abrasive Profil der Abrichtrolle im Radialschnitt zumindest abschnittsweise zahnförmig ausgebildet ist und sich radial von einem Fußbereich bis zu einem Kopfbereich erstreckt, wobei die Abrichtrolle erzeugt wird durch die Schritte:
a) Herstellen einer Negativform, die eine innenliegende, im Radialschnitt zumindest abschnittsweise zahnförmige Oberfläche aufweist;
b) Aufbringen einer Lage von Abrasivpartikeln auf der zahnförmigen Oberfläche und Fixieren der Abrasivpartikel mittels eines Trägermaterials, wobei das Trägermaterial eine Trägerschicht für die Abrasivpartikel bildet;
c) Herstellen eines scheibenförmigen Grundkörpers der Abrichtrolle, insbesondere Einbringen des Grundkörpers in die Negativform, Verbinden des Grundkörpers mit der Trägerschicht samt den Abrasivpartikeln;
d) Entformen des Grundkörpers der Abrichtrolle samt Trägerschicht und Abrasivpartikeln aus der Negativform;
e) Profilieren des mit Abrasivpartikeln versehenen Grundkörpers, indem mit einem Profilierwerkzeug außenliegende Abschnitte der Abrasivpartikel so entfernt werden, dass sich das abrasive Soll-Profil der Abrichtrolle ergibt.

Bei der Hartfeinbearbeitung von Verzahnungen oder Profilen, insbesondere im Falle einer Massen- oder Großserienfertigung, werden als Schleifwerkzeuge häufig abrichtbare Schleifschnecken eingesetzt. Um die benötigte Qualität des zu fertigenden Zahnrads aufrechtzuerhalten, d. h. Verschleiß an der Schleifschnecke auszugleichen und auch die gewünschte bzw. benötigte Oberflächenstruktur der Schleifflächen der Schleifschnecke bereitzustellen, werden Abrichtrollen eingesetzt, die zumeist diamantbelegt sind.

Bei der Herstellung einer solchen Abrichtrolle kann ein präzise geschliffener Stahlgrundkörper mit einer Schicht Abrasivpartikel, meist in Form von Diamant-Körner, in einem galvanischen Prozess belegt werden.

Ein hierzu alternatives, gattungsgemäßes Verfahren besteht darin, eine Negativform bereitzustellen, die in ihrem Inneren eine zahnförmige Oberfläche aufweist, die im wesentlichen dem späteren abrasiven Profil der Abrichtrolle entspricht. Auf besagter zahnförmiger Oberfläche werden dann Abrasivpartikel (zumeist Diamant- oder CBN-Partikel) verteilt und (beispielsweise mittels Nickel) fixiert, d. h. die Abrasivpartikel werden im Inneren der Negativform auf der genannten Oberfläche verteilt und beispielsweise in einer Schicht Nickel eingebettet; das Material, hier: Nickel, das die Abrasivpartikel hält, bildet eine Trägerschicht für die Abrasivpartikel. Dann wird der Grundkörper der Abrichtrolle hergestellt (durch spanende Bearbeitung). Der Grundkörper wird in die Negativform eingebracht und beispielsweise mittels eines Füllmaterials mit der Trägerschicht und somit mit den von dieser gehaltenen Abrasivpartikeln verbunden. Nach dem Entformen des so hergestellten Abrichtwerkzeugs wird dieses im Bereich des abrasiven Profils mit einem Profilierwerkzeug auf die benötigte Form gebracht.

In Abhängigkeit von der Qualität der erfolgten Belegung mit Abrasivpartikeln und der geforderten Oberflächengüte bzw. Formgenauigkeit des zu schleifenden Zahnrads muss das Profil der Abrichtrolle nämlich nachbearbeitet werden. Die Nachbearbeitung erfolgt beispielsweise auf einer Koordinatenschleifmaschine mittels Diamantschleifscheiben entsprechend, wobei die Hüllkurve der Abrasivpartikel der Abrichtrolle mit dem theoretischen Soll-Profil versehen wird.

Je nach Zustellung bei der Nachbearbeitung werden entlang der Flankenhöhe der Abrichtrolle (d. h. vom Fußbereich bis zum Kopfbereich, s. o.) relativ gleiche Werte des Materialanteils erzeugt. Beim Einsatz der so hergestellten Abrichtrolle beim Abrichten der Schleifschnecke werden entlang der Flankenhöhe der Schnecke entsprechend relativ gleiche Werte des Materialanteils erzeugt.

Ist die Abrichtrolle auf diese Weise fertiggestellt, wird deren Profil beim Abrichten der Schleifschnecke auf diese übertragen und dann in der Folge beim Schleifen des Werkstücks das Profil der Schneckenflanken der Schleifschnecke auf das zu schleifende zahnradförmige Werkstück durch den Wälzschleifprozess übertragen. Demgemäß ist die Oberflächenrauheit in unterschiedlichen Bereichen der Zahnradflanke dann auch relativ gleich.

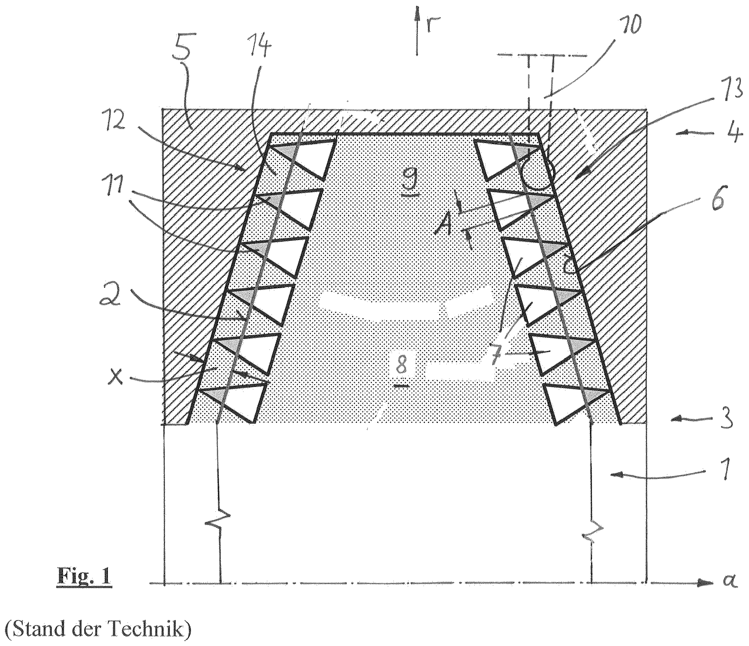

Dieses Vorgehen ist in Figur 1 illustriert. Zu erkennen ist hier der Radialschnitt durch einen Teil einer (rotationssymmetrischen) Negativform 5.

Diese hat in ihrem Inneren einen Hohlraum 9 mit einer zahnförmigen Oberfläche 6, die in einem ersten Arbeitsschritt mit Abrasivpartikeln 7 belegt wird; die Partikel 7 werden dabei beispielsweise durch eine Nickelschicht an der Oberfläche 6 fixiert; die Nickelschicht ist hier generell als Trägerschicht 14 angesprochen, die eine Schicht bildet, die die Abrasivpartikel 7 in der dargestellten Position hält. Die Oberfläche 6 erstreckt sich dabei in radiale Richtung r von einem Fußbereich 3 bis zu einem Kopfbereich 4.

Die Form der Oberfläche 6 entspricht dem später gewünschten Endprofil 2 der Abrichtrolle 1, sie liegt allerdings um einen Abstand x - gemessen senkrecht auf die Oberfläche 6 - vor dem abrasiven Profil 2.

Dann wird der Grundkörper der Abrichtrolle 1 hergestellt, und zwar durch spanende Bearbeitung, bis ein scheibenförmiges Bauteil vorliegt, das in das Innere der Negativform 5 eingeschoben wird. Mittels eines Füllmaterials wird dann der Grundkörper mit der Trägerschicht 14 und somit mit den Abrasivpartikeln 7 verbunden. Mit der Bezugsziffer 8 ist hier wie auch in den nachfolgenden Ausführungsbeispielen der Grundkörper samt besagtem Füllmaterial markiert, das sich mit der Trägerschicht 14 verbunden hat. Auf diese Weise werden die Abrasivpartikel 7 mit dem Grundkörper der Abrichtrolle 1 verbunden.

Generell sind auch andere Herstellungsverfahren für den Grundkörper und dessen Verbinden mit der Trägerschicht denkbar, z. B. durch Gießen des Grundkörpers.

Nach dem Entformen der so hergestellten scheibenförmigen Abrichtrolle 1 wird deren abrasives Profil 2 präzise hergestellt, indem ein Profilierwerkzeug 10 (Diamantschleifscheibe) besagtes Profil 2 schleift. Bei diesem Vorgang rotiert die Abrichtrolle 1 um ihre Drehachse a und das Profilierwerkzeug 10 um seine (nicht näher bezeichnete) Drehachse.

Bei dem genannten Profiliervorgang mit dem Profilierwerkzeug 10 werden außenliegende Abschnitte 11 der Abrasivpartikel 7 abgetragen und so das gewünschte Profil 2 hergestellt. Auf diese Weise werden beide Flanken 12 und 13 des Profils 2 bzw. der Abrichtrolle 1 fertiggestellt. Schematisch angegeben ist der Oberflächenbereich A der Abrasivpartikel, der zum Abrichten bei der fertig gestellten Abrichtrolle vorliegt bzw. zur Verfügung steht (dargestellt ist mit "A" die Breite im Radialschnitt; in Richtung senkrecht auf die Zeichenebene ergibt sich eine entsprechende Tiefe der Abrasivpartikel, so dass insgesamt eine Fläche vorliegt).

Konzeptionell liegt damit über die gesamte radiale Erstreckung des Profils 2 im wesentlichen die gleiche Oberflächenrauheit der Abrichtrolle vor, so dass dies über das Abrichten der Schleifschnecke und das Schleifen eines Zahnrades mit derselben dann auch für das fertige Werkstück gilt. Dies allerdings ist nicht in jedem Falle gewünscht.

Die DE 91 07 089 U1 offenbart ein Abrichtrad zum Profilieren von Schleifwerkzeugen. Ähnliche Lösungen zeigen die JP 2005 271127 A, die DE 10 2010 045 836 A1 und CH 684 249 A5.

Die CH 684 249 A5 bildet die Basis für den Oberbegriff des Anspruchs 1.

Manchmal gibt es Fälle, bei denen es gewünscht ist, dass sich eine variable Oberflächenrauheit der geschliffenen Zahnflanke über der Zahnhöhe ergibt. Der Erfindung liegt die **Aufgabe** zugrunde, ein gattungsgemäßes Verfahren so fortzubilden und eine entsprechende Abrichtrolle bereitzustellen, mit dem bzw. mit der es möglich ist, gezielt die Oberflächenrauheit der geschliffenen Zahnflanke über der Zahnhöhe zu beeinflussen, was erreicht werden soll, in dem der zum Einsatz kommende Materialanteil des Abrasivmaterials über der Flankenhöhe der Abrichtrolle gezielt beeinflusst wird.

Die **Lösung** dieser Aufgabe durch die Erfindung sieht vor, dass das Profilieren des mit Abrasivpartikeln versehenen Grundkörpers gemäß Schritt e) dergestalt erfolgt, dass sich der Abstand zwischen der Oberfläche und dem abrasiven Soll-Profil zumindest an einer Flanke der Oberfläche, gemessen im Radialschnitt senkrecht auf die Oberfläche, beim Voranschreiten vom Fußbereich zum Kopfbereich ändert, wobei die Abrasivpartikel zur Bildung des abrasiven Profils einen Oberflächenbereich bilden, dessen Größe sich beim Voranschreiten vom Fußbereich zum Kopfbereich zumindest an einer Flanke der zumindest abschnittsweise zahnförmig ausgebildeten Oberfläche ändert.

Dabei kann vorgesehen sein, dass das Profilieren des mit Abrasivpartikeln versehenen Grundkörpers gemäß Schritt e) dergestalt erfolgt, dass der Abstand zwischen der Oberfläche und dem abrasiven Profil, gemessen im Radialschnitt senkrecht auf die Oberfläche, beim Voranschreiten vom Fußbereich zum Kopfbereich zunimmt oder abnimmt. Die Zunahme oder Abnahme des Abstands kann dabei an beiden Flanken der zahnförmig ausgebildeten Oberfläche gleich sein.

Möglich ist es auch, dass das Profilieren des mit Abrasivpartikeln versehenen Grundkörpers gemäß Schritt e) dergestalt erfolgt, dass der Abstand zwischen der Oberfläche und dem abrasiven Profil, gemessen im Radialschnitt senkrecht auf die Oberfläche, beim Voranschreiten vom Fußbereich zum Kopfbereich an einer Flanke der zahnförmigen Oberfläche zunimmt und an der anderen Flanke der zahnförmigen Oberfläche abnimmt.

Besagte Zunahme oder Abnahme des Abstands kann dabei beim Voranschreiten vom Fußbereich zum Kopfbereich linear erfolgen.

Sie kann aber auch nichtlinear erfolgen, wobei dann insbesondere vorgesehen sein kann, dass die Zunahme oder Abnahme des Abstands beim Voranschreiten vom Fußbereich zum Kopfbereich so erfolgt, dass sich für den Abstand über der profilierten Oberfläche ein balliger (parabolischer) Verlauf ergibt. Alternativ vorgesehen kann auch werden, dass die Zunahme oder Abnahme des Abstands abschnittsweise linear erfolgt, aber mit unterschiedlichen Linearitäten.

Die Abrichtrolle zum Abrichten einer Schleifschnecke, die einen scheibenförmigen Grundkörper mit einer profilierten, im Radialschnitt zumindest abschnittsweise zahnförmigen Oberfläche aufweist, wobei sich die Oberfläche radial von einem Fußbereich bis zu einem Kopfbereich erstreckt und wobei die Oberfläche mit einer Lage Abrasivpartikel versehen ist, wobei außenliegende Endbereiche der Abrasivpartikel ein abrasives Profil bilden, zeichnet sich dadurch aus, dass die Abrasivpartikel zur Bildung des abrasiven Profils einen Oberflächenbereich bilden, dessen Größe sich beim Voranschreiten vom Fußbereich zum Kopfbereich (zumindest an einer Flanke der zahnförmig ausgebildeten Oberfläche) ändert.

Die vorliegende Erfindung stellt somit ein Verfahren zur Herstellung einer Abrichtrolle bereit, um mit der Rolle in einer solchen Weise eine abrichtbare Schleifschnecke abrichten zu können, so dass mit dieser die Erzeugung einer variablen Oberflächenrauheit entlang der Zahnhöhe eines zahnradförmigen Werkstückes möglich wird.

Dabei wird es möglich, ein Werkzeug (Abrichtrolle) zum Abrichten einer abrichtbaren Schleifschnecke mit einem variablen Materialanteil entlang der Flankenhöhe bereitzustellen, damit auch die abrichtbare Schleifschnecke mit einem variablen Materialanteil entlang der Flankenhöhe erzeugt wird und damit dann weiterhin eine variable Oberflächenrauheit entlang der Zahnhöhe eines zu schleifenden Werkstückes produziert werden kann.

Mit der vorgeschlagenen Lösung ist es somit möglich, dass bestimmte Wünsche bzw. Vorgaben hinsichtlich der Oberfläche der Flanke einer Verzahnung erfüllt werden können; namentlich kann die Zahnflanke so bearbeitet werden, dass sich die Oberflächenrauheit entlang der Zahnhöhe in einer gewünschten Weise ergibt. Hierzu wird das erfindungsgemäße Verfahren bzw. die Abrichtrolle mit einem gezielten variablen Materialanteil entlang der Flankenhöhe als Vorgabe eingesetzt.

Zusammengefasst kann man das Erfindungskonzept nochmals wie folgt formulieren:
Bei der Auslegung der zahnförmigen Oberfläche der Negativform für die Herstellung der Abrichtrolle wird also ein bewusst "falsches" Werkzeugprofil als Basis hinterlegt. Nach der Herstellung des Grundkörpers mit einer Schicht Abrasivkörner (d. h. insbesondere mit Bornitrid- (CBN) oder Diamantkörnern gleicher Größe und/oder Körnung) wird das Abrichtwerkzeug (Abrichtrolle) mit einer (Diamant) Schleifscheibe wie erläutert nachbearbeitet. Die Nachbearbeitung erfolgt aber nicht mit einem äquidistanten Abstand zwischen dem Profil der zahnförmigen Oberfläche (der Negativform) und dem zu erzeugenden Abrasivprofil, sondern entsprechend dem "richtigen" Soll-Profil.

Am Ende des Prozesses ist also von den Abrasivpartikeln über der Zahnhöhe kein konstanter (äquidistanter) Betrag entfernt, sondern der entfernte Betrag verändert sich über der radialen Höhe des abrasiven Profils. Ausgehend davon, dass alle Abrasivkörner, die die Lage auf dem Grundkörper bilden, die gleiche Korngröße aufweisen, d. h. etwa gleiche Abmessungen haben, werden die einzelnen Abrasivkörner demgemäß also bei der Nachbearbeitung unterschiedlich stark abgetragen.

Es sei zur Klarstellung angemerkt, dass auch bei Wahl eines definierten Korndurchmessers für die Beschichtung des Grundkörpers immer nur ein gewisser Durchmesserbereich für die Körner vorliegt, d. h. diese haben nie genau denselben Durchmesser; dies ist aber nicht hinderlich. Im Gegenteil kann es vorteilhaft sein, insofern auf ein Mischkorn zurückzugreifen, das Körner eines gewissen Durchmesserbereichs umfasst.

Dadurch entstehen in unterschiedlichen Bereichen der Abrichtrollenoberfläche entlang der Flankenhöhe unterschiedliche Werte für den die Schneidfläche bildenden Materialanteil.

Beim Abrichten der Schleifschnecke wird dann in der Konsequenz das Abrichtwerkzeugprofil mit variablem Materialanteil in jedem Gang der Schleifschnecke entsprechend abgebildet. Beim Schleifen findet dann die weitere Übertragung des variablen Materialanteils auf die Zahnflanken der Verzahnung des zu schleifenden Werkstücks statt.

Das vorgeschlagene Konzept kann dabei natürlich sowohl beim Abrichten einer eingängigen als auch beim Abrichten einer mehrgängigen Schleifschnecke eingesetzt werden.

In den Zeichnungen sind Ausführungsbeispiele der Erfindung dargestellt. Es zeigen:
- Fig. 1: schematisch den Radialschnitt durch eine Negativform und die mittels dieser hergestellte Abrichtrolle zum Abrichten einer Schleifschnecke, wobei das Vorgehen gemäß dem Stand der Technik illustriert ist,
- Fig. 2: schematisch den Radialschnitt durch die Negativform und die Abrichtrolle zum Abrichten der Schleifschnecke, wobei das Vorgehen gemäß der Erfindung nach einem ersten Ausführungsbeispiel illustriert ist,
- Fig. 3: in der Darstellung gemäß Figur 2 ein zweites Ausführungsbeispiel gemäß der Erfindung,
- Fig. 4: in der Darstellung gemäß Figur 2 ein drittes Ausführungsbeispiel gemäß der Erfindung,
- Fig. 5: in der Darstellung gemäß Figur 2 ein viertes Ausführungsbeispiel gemäß der Erfindung und
- Fig. 6: in der Darstellung gemäß Figur 2 ein fünftes Ausführungsbeispiel gemäß der Erfindung.

Aus dem Vergleich der Figuren 1 (Lösung gemäß dem Stand der Technik) und 2 (erfindungsgemäße Ausführungsform) lässt sich das Prinzip der vorliegenden Erfindung wie folgt erläutern:
Zunächst wird eine Negativform 5 mit einem innenliegenden (Hohl)Raum 9 bereitgestellt, wobei der Raum 9 durch eine zahnförmige Oberfläche 6 begrenzt wird. Die zahnförmige Oberfläche 6 entspricht dabei im wesentlichen, allerdings nicht exakt dem späteren gewünschten abrasiven Profil 2 der herzustellenden Abrichtrolle 1. Die Oberfläche 6, die sich von einem Fußbereich 3 in radiale Richtung r bis zu einem Kopfbereich 4 erstreckt, wird mit Abrasivpartikeln 7 versehen und besagte Partikel auf der Oberfläche 6 fixiert (zum Beispiel durch eine galvanisch oder chemisch abgeschiedene Nickelschicht). Die Fixierung erfolgt mittels einer dünnen Trägerschicht 14, im Ausführungsbeispiel aus Nickel. Die einzelnen Abrasivpartikel 7 haben im wesentlichen dieselbe Größe und bilden folglich auf der Oberfläche 6 eine Schicht mit konstanter Dicke.

Dann wird der Grundkörper der Abrichtrolle hergestellt, und zwar durch spanende Bearbeitung. Der Grundkörper wird in die Negativform 5 eingebracht, nämlich axial eingeschoben, und dann ein Füllmaterials eingebracht, das den Grundkörper mit der Trägerschicht 14 verbindet. Mit der Bezugsziffer 8 ist der Grundkörper samt Füllmaterial bezeichnet. Auf diese Weise werden die Abrasivpartikel mit dem Grundkörper verbunden.

Nach dem Entformen der so hergestellten Abrichtrolle 1 wird diese im Bereich des abrasiven Profils 2 mit einem Profilierwerkzeug 10 auf die benötigte Form gebracht. Es erfolgt also ein Profilieren des gewünschten abrasiven Profils 2 der Abrichtrolle 1 mittels eines Profilierwerkzeugs 10. Hierbei werden außenliegende Abschnitte 11 der Abrasivpartikel 7 abgetragen, so dass sich das für das Abrichten einer Schleifschnecke benötigte abrasive Profil 2 ergibt.

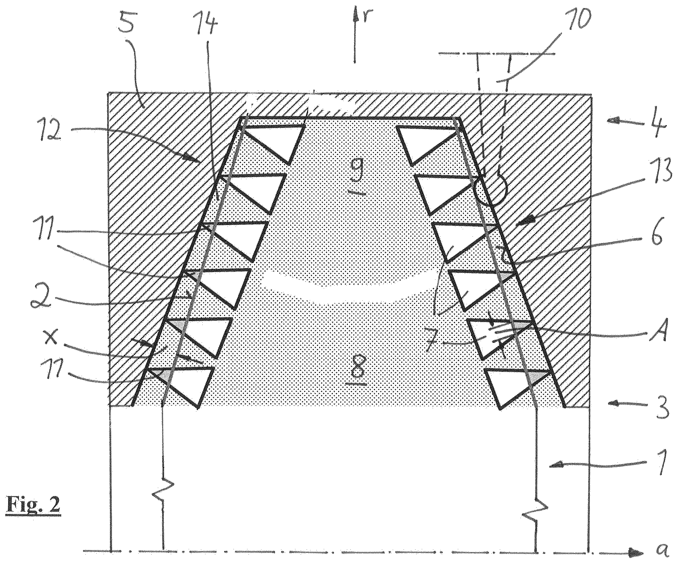

Wesentlich ist dabei, dass besagte Herstellung der zahnförmigen Oberfläche 6 und des abrasiven Profils 2 so erfolgt, dass sich der Abstand x zwischen der zahnförmigen Oberfläche 6 und dem abrasiven Profil 2 (Endprofil) zumindest an einer Flanke 12 bzw. 13 der zahnförmigen Oberfläche 6 bzw. des Abrichtwerkzeugs - gemessen im Radialschnitt senkrecht auf die Oberfläche 6 - beim Voranschreiten vom Fußbereich 3 zum Kopfbereich 4 ändert. In Figur 2 ist dies dadurch leicht zu erkennen, dass die hier im Radialschnitt exemplarisch gerade ausgebildeten Verläufe der Oberfläche 6 und des abrasiven Profils 2 nicht parallel sondern unter einem Winkel zueinander verlaufen. Dies ist bei der Lösung gemäß dem Stand der Technik nicht der Fall; hier verlaufen die Oberfläche 6 und das Profil 2 parallel zueinander.

Die Konsequenz dieses Vorgehens ist, dass die nach dem Profilieren der Abrichtrolle 1 vorliegenden Schneidbereiche der Abrasivpartikel 7 über der Zahnhöhe unterschiedliche Oberflächenbereiche A aufweisen. Im Ausführungsbeispiel nach Figur 2 ist besagter Oberflächenbereich für die radial innen liegenden Abrasivpartikel 7 größer als für die radial außen liegenden Partikel.

In den weiteren Figuren sind Variationen des Ausführungsbeispiels gemäß Figur 2 zu sehen.

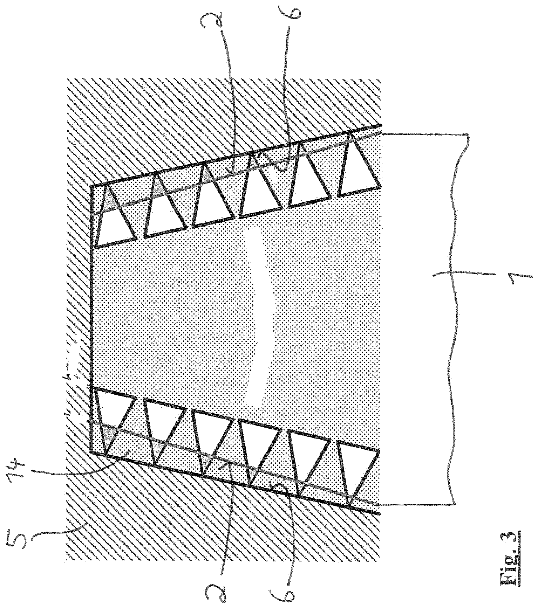

Bei der Lösung gemäß Figur 3 ist vorgesehen, dass gleichermaßen ein winkeliger Verlauf zwischen der Oberfläche 6 und dem Profil 2 gegeben ist, wobei jetzt allerdings die Oberflächenbereiche A radial nach außen hin zunehmen (bei Figur 2 nahmen sie ab).

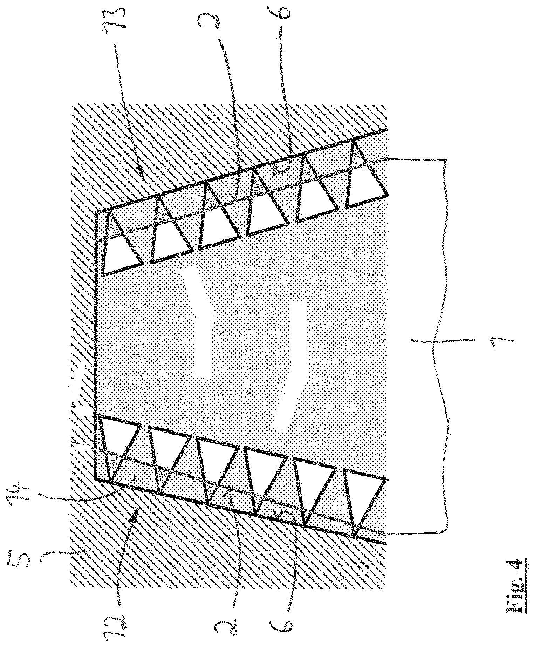

Figur 4 illustriert, dass die vorgeschlagene Maßnahme nicht zwingend auf beiden Flanken 12 und 13 in gleicher Weise umgesetzt werden muss. Vielmehr weist hier lediglich die Flanke 12 die erfindungsgemäße Ausgestaltung auf, während die Flanke 13 nach dem Stand der Technik (siehe Figur 1) ausgeführt ist.

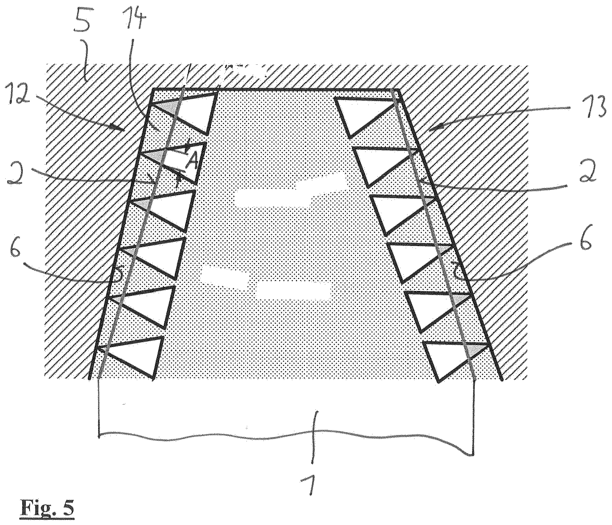

In Figur 5 kann gesehen werden, dass die Zu- bzw. Abnahme der Oberflächenbereiche A an den beiden Flanken 12 und 13 unterschiedlich orientiert sein kann: Während an der Flanke 12 mit radial zunehmendem Abstand von der Drehachse a (siehe Figur 2) der Oberflächenbereich A zunimmt, nimmt er an der Flanke 13 ab.

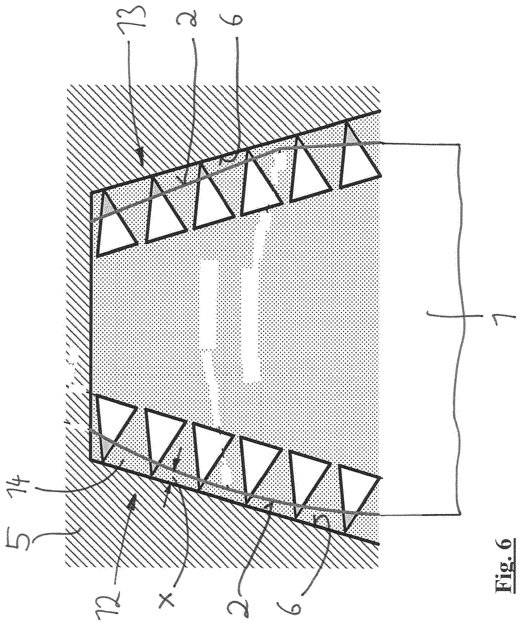

Schließlich zeigt Figur 6, dass der Abstand x zwischen der profilierten Oberfläche 6 und dem abrasiven Profil 2 nicht zwingend linear zu- bzw. abnehmen muss. An der Flanke 12 ist für den Abstand x über die Zahnhöhe ein balliger (parabolischer) Verlauf vorgesehen. An der Flanke 13 sind segmentierte Bereiche vorgesehen, binnen derer ein linearer Verlauf für die Zu- bzw. Abnahme des Abstands x gegeben ist, allerdings gegensinnig orientiert.

### Bezugszeichenliste:

- 1: Abrichtrolle
- 2: abrasives Profil der Abrichtrolle
- 3: Fußbereich
- 4: Kopfbereich
- 5: Negativform
- 6: zahnförmige Oberfläche der Negativform
- 7: Abrasivpartikel (Diamantkörner / CBN-Körner)
- 8: Grundkörper der Abrichtrolle (samt Füllmaterial)
- 9: innenliegender Raum der Negativform
- 10: Profilierwerkzeug
- 11: außenliegende Abschnitte der Abrasivpartikel
- 12: Flanke der Oberfläche
- 13: Flanke der Oberfläche
- 14: Trägerschicht

- r: radiale Richtung
- x: Abstand zwischen zahnförmiger Oberfläche und abrasivem Profil
- A: Oberflächenbereich
- a: Drehachse

## Patentansprüche

1. Verfahren zum Abrichten einer Schleifschnecke mittels einer Abrichtrolle (1), bei dem die mit einem abrasiven Profil (2) versehene Abrichtrolle (1) in Eingriff mit der Schleifschnecke gebracht wird, um deren schneckenförmiges Schleifprofil zu profilieren,
wobei das abrasive Profil (2) der Abrichtrolle (1) im Radialschnitt zumindest abschnittsweise zahnförmig ausgebildet ist und sich radial (r) von einem Fußbereich (3) bis zu einem Kopfbereich (4) erstreckt,
wobei die Abrichtrolle (1) erzeugt wird durch die Schritte:
a) Herstellen einer Negativform (5), die eine innenliegende, im Radialschnitt zumindest abschnittsweise zahnförmige Oberfläche (6) aufweist;
b) Aufbringen einer Lage von Abrasivpartikeln (7) auf der zahnförmigen Oberfläche (6) und Fixieren der Abrasivpartikel (7) mittels eines Trägermaterials, wobei das Trägermaterial eine Trägerschicht (14) für die Abrasivpartikel (7) bildet;
c) Herstellen eines scheibenförmigen Grundkörpers (8) der Abrichtrolle (1) und Verbinden des Grundkörpers (8) mit der Trägerschicht (14) samt den Abrasivpartikeln (7);
d) Entformen des Grundkörpers (8) der Abrichtrolle (1) samt Trägerschicht (14) und Abrasivpartikeln (7) aus der Negativform (5);
e) Profilieren des mit Abrasivpartikeln (7) versehenen Grundkörpers (8), indem mit einem Profilierwerkzeug (10) außenliegende Abschnitte (11) der Abrasivpartikel (7) so entfernt werden, dass sich das abrasive Soll-Profil (2) der Abrichtrolle (1) ergibt,
**dadurch gekennzeichnet, dass** das Profilieren des mit Abrasivpartikeln (7) versehenen Grundkörpers (8) gemäß Schritt e) dergestalt erfolgt, dass sich der Abstand (x) zwischen der Oberfläche (6) und dem abrasiven Soll-Profil (2) zumindest an einer Flanke (12, 13) der Oberfläche (6), gemessen im Radialschnitt senkrecht auf die Oberfläche (6), beim Voranschreiten vom Fußbereich (3) zum Kopfbereich (4) ändert, wobei die Abrasivpartikel (7) zur Bildung des abrasiven Profils (2) einen Oberflächenbereich (A) bilden, dessen Größe sich beim Voranschreiten vom Fußbereich (3) zum Kopfbereich (4) zumindest an einer Flanke (12, 13) der zumindest abschnittsweise zahnförmig ausgebildeten Oberfläche (6) ändert.

2. Verfahren nach Anspruch 1, **dadurch gekennzeichnet, dass** das Profilieren des mit Abrasivpartikeln (7) versehenen Grundkörpers (8) gemäß Schritt e) dergestalt erfolgt, dass der Abstand (x) zwischen der Oberfläche (6) und dem abrasiven Profil (2), gemessen im Radialschnitt senkrecht auf die Oberfläche (6), beim Voranschreiten vom Fußbereich (3) zum Kopfbereich (4) zunimmt.

3. Verfahren nach Anspruch 1, **dadurch gekennzeichnet, dass** das Profilieren des mit Abrasivpartikeln (7) versehenen Grundkörpers (8) gemäß Schritt e) dergestalt erfolgt, dass der Abstand (x) zwischen der Oberfläche (6) und dem abrasiven Profil (2), gemessen im Radialschnitt senkrecht auf die Oberfläche (6), beim Voranschreiten vom Fußbereich (3) zum Kopfbereich (4) abnimmt.

4. Verfahren nach Anspruch 2 oder 3, **dadurch gekennzeichnet, dass** die Zunahme oder Abnahme des Abstands (x) an beiden Flanken (12, 13) der zahnförmigen Oberfläche (6) gleich ist.

5. Verfahren nach Anspruch 1, **dadurch gekennzeichnet, dass** das Profilieren des mit Abrasivpartikeln (7) versehenen Grundkörpers (8) gemäß Schritt e) dergestalt erfolgt, dass der Abstand (x) zwischen der Oberfläche (6) und dem abrasiven Profil (2), gemessen im Radialschnitt senkrecht auf die Oberfläche (6), beim Voranschreiten vom Fußbereich (3) zum Kopfbereich (4) an einer Flanke (12) der zahnförmigen Oberfläche (6) zunimmt und an der anderen Flanke (13) der zahnförmigen Oberfläche (6) abnimmt.

6. Verfahren nach einem der Ansprüche 2 bis 5, **dadurch gekennzeichnet, dass** die Zunahme oder Abnahme des Abstands (x) beim Voranschreiten vom Fußbereich (3) zum Kopfbereich (4) linear erfolgt.

7. Verfahren nach einem der Ansprüche 2 bis 5, **dadurch gekennzeichnet, dass** die Zunahme oder Abnahme des Abstands (x) beim Voranschreiten vom Fußbereich (3) zum Kopfbereich (4) nichtlinear erfolgt.

8. Verfahren nach Anspruch 7, **dadurch gekennzeichnet, dass** die Zunahme oder Abnahme des Abstands (x) beim Voranschreiten vom Fußbereich (3) zum Kopfbereich (4) so erfolgt, dass sich für den Abstand (x) über der zahnförmigen Oberfläche (6) ein balliger Verlauf ergibt.

9. Verfahren nach Anspruch 7, **dadurch gekennzeichnet, dass** die Zunahme oder Abnahme des Abstands (x) abschnittsweise linear erfolgt, aber mit unterschiedlichen Linearitäten.

## Claims

1. Method for dressing of a grinding worm by means of a dressing roll (1) in which the dressing roll (1), which is provided with an abrasive profile (2), is brought into engagement with the grinding worm to profile its helical grinding profile,
wherein the abrasive profile (2) of the dressing roll (1) is at least partially designed tooth-shaped in a radial cross section and extends radially (r) from a root region (3) to a tip region (4),
wherein the dressing roll (1) is produced by the steps:
a) Producing of a counterpart (5) which has an inner surface (6) which is at least partially tooth-shaped in the radial cross section;
b) Positioning of a layer of abrasive particles (7) on the tooth-shaped surface (6) and fixing of the abrasive particles (7) by means of a carrier material, wherein the carrier material forms a carrier layer (14) for the abrasive particles (7);
c) Producing of a disk-shaped base body (8) of the dressing roll (1) and connecting of the base body (8) with the carrier layer (14) including the abrasive particles (7);
d) Demoulding of the base body (8) of the dressing roll (1) including carrier layer (14) and abrasive particles (7) from the counterpart (5);
e) Profiling of the base body (8) which is provided with abrasive particles (7) by removing outer sections (11) of the abrasive particles (7) with a profiling tool (10) in such a manner that the abrasive desired profile (2) of the dressing roll (1) is created,
**characterized in that**
the profiling of the base body (8) which is provided with abrasive particles (7) according step e) takes place in such a manner that the distance (x) between the surface (6) and the abrasive profile (2) is changing during advancing from the root region (3) to the tip region (4) at least at one flank (12, 13) of the surface (6), measured in the radial cross section perpendicular to the profiled surface (6), wherein the abrasive particles (7) for forming the abrasive profile (2) form a surface region (A), the size of which changes as it advances from the root region (3) to the tip region (4) at least on one flank (12, 13) of the surface (6) which is tooth-shaped formed at least in sections.

2. Method according to claim 1, **characterized in that** the profiling of the base body (8) which is provided with abrasive particles (7) according step e) takes place in such a manner that the distance (x) between the surface (6) and the abrasive profile (2) is increasing during advancing from the root region (3) to the tip region (4), measured in the radial cross section perpendicular to the surface (6).

3. Method according to claim 1, **characterized in that** the profiling of the base body (8) which is provided with abrasive particles (7) according step e) takes place in such a manner that the distance (x) between the surface (6) and the abrasive profile (2) is decreasing during advancing from the root region (3) to the tip region (4), measured in the radial cross section perpendicular to the surface (6).

4. Method according to claim 2 or 3, **characterized in that** the increase or the decrease of the distance (x) at both flanks (12, 13) of the tooth-shaped surface (6) is equal.

5. Method according to claim 1, **characterized in that** the profiling of the base body (8) which is provided with abrasive particles (7) according step e) takes place in such a manner that the distance (x) between the surface (6) and the abrasive profile (2) is increasing during advancing from the root region (3) to the tip region (4) at one of the flanks (12) of the tooth-shaped surface (6) and is decreasing at the other flank (13) of the tooth-shaped surface (6), measured in the radial cross section perpendicular to the surface (6).

6. Method according to one of claims 2 to 5, **characterized in that** the increase or the decrease of the distance (x) takes place linear during advancing from the root region (3) to the tip region (4).

7. Method according to one of claims 2 to 5, **characterized in that** the increase or the decrease of the distance (x) takes place non-linear during advancing from the root region (3) to the tip region (4).

8. Method according to claim 7, **characterized in that** the increase or the decrease of the distance (x) during advancing from the root region (3) to the tip region (4) takes place in such a manner that a convex design for the distance (x) along the tooth-shaped surface (6) is created.

9. Method according to claim 7, **characterized in that** the increase or the decrease of the distance (x) takes place in sections linear but with different linearity.

## Revendications

1. Procédé de dressage d'une meule à vis au moyen d'une roulette de dressage (1), selon lequel la roulette de dressage (1) munie d'un profil abrasif (2) est mise en prise avec la meule à vis afin de profiler son profil de meulage en forme de vis,
le profil abrasif (2) de la roulette de dressage (1) étant configuré au moins en sections sous forme dentée dans la coupe radiale et s'étendant radialement (r) d'une zone de pied (3) à une zone de tête (4),
la roulette de dressage (1) étant produite par les étapes suivantes :
a) la fabrication d'un moule négatif (5), qui comprend une surface intérieure (6), au moins en sections sous forme dentée dans la coupe radiale ;
b) l'application d'une couche de particules abrasives (7) sur la surface sous forme dentée (6) et la fixation des particules abrasives (7) au moyen d'un matériau support, le matériau support formant une couche support (14) pour les particules abrasives (7) ;
c) la fabrication d'un corps de base en forme de plaque (8) de la roulette de dressage (1) et la liaison du corps de base (8) à la couche support (14) incluant les particules abrasives (7) ;
d) le démoulage du corps de base (8) de la roulette de dressage (1) incluant la couche support (14) et les particules abrasives (7) du moule négatif (5) ;
e) le profilage du corps de base (8) muni de particules abrasives (7), par le fait que des sections extérieures (11) des particules abrasives (7) sont éliminées avec un outil de profilage (10), de telle sorte que le profil abrasif de consigne (2) de la roulette de dressage (1) est obtenu,
**caractérisé en ce que**
le profilage du corps de base (8) muni de particules abrasives (7) a lieu selon l'étape e), de telle sorte que la distance (x) entre la surface (6) et le profil abrasif de consigne (2) au moins au niveau d'un flanc (12, 13) de la surface (6), mesurée dans la coupe radiale perpendiculairement à la surface (6), se modifie lors de la progression de la zone de pied (3) à la zone de tête (4), les particules abrasives (7) pour la formation du profil abrasif (2) formant une zone de surface (A), dont la taille se modifie lors de la progression de la zone de pied (3) à la zone de tête (4) au moins au niveau d'un flanc (12, 13) de la surface (6) formée au moins en sections sous forme dentée.

2. Procédé selon la revendication 1, **caractérisé en ce que** le profilage du corps de base (8) muni de particules abrasives (7) a lieu selon l'étape e) de telle sorte que la distance (x) entre la surface (6) et le profil abrasif (2), mesurée dans la coupe radiale perpendiculairement à la surface (6), augmente lors de la progression de la zone de pied (3) à la zone de tête (4) .

3. Procédé selon la revendication 1, **caractérisé en ce que** le profilage du corps de base (8) muni de particules abrasives (7) a lieu selon l'étape e) de telle sorte que la distance (x) entre la surface (6) et le profil abrasif (2), mesurée dans la coupe radiale perpendiculairement à la surface (6), diminue lors de la progression de la zone de pied (3) à la zone de tête (4) .

4. Procédé selon la revendication 2 ou 3, **caractérisé en ce que** l'augmentation ou la diminution de la distance (x) est identique sur les deux flancs (12, 13) de la surface sous forme dentée (6).

5. Procédé selon la revendication 1, **caractérisé en ce que** le profilage du corps de base (8) muni de particules abrasives (7) a lieu selon l'étape e) de telle sorte que la distance (x) entre la surface (6) et le profil abrasif (2), mesurée dans la coupe radiale perpendiculairement à la surface (6), augmente au niveau d'un flanc (12) de la surface sous forme dentée (6) et diminue au niveau de l'autre flanc (13) de la surface sous forme dentée (6) lors de la progression de la zone de pied (3) à la zone de tête (4).

6. Procédé selon l'une quelconque des revendications 2 à 5, **caractérisé en ce que** l'augmentation ou la diminution de la distance (x) lors de la progression de la zone de pied (3) à la zone de tête (4) a lieu de manière linéaire.

7. Procédé selon l'une quelconque des revendications 2 à 5, **caractérisé en ce que** l'augmentation ou la diminution de la distance (x) lors de la progression de la zone de pied (3) à la zone de tête (4) a lieu de manière non linéaire.

8. Procédé selon la revendication 7, **caractérisé en ce que** l'augmentation ou la diminution de la distance (x) lors de la progression de la zone de pied (3) à la zone de tête (4) a lieu de telle sorte que la distance (x) présente une évolution convexe sur la surface sous forme dentée (6).

9. Procédé selon la revendication 7, **caractérisé en ce que** l'augmentation ou la diminution de la distance (x) a lieu de manière linéaire en sections, mais avec des linéarités différentes.
